Europäisches Patentamt

**European Patent Office**

**Office européen des brevets**

(11) Numéro de publication: **0 184 497**
**B1**

(12) **FASCICULE DE BREVET EUROPÉEN**

(45) Date de publication du fascicule du brevet:
28.02.90

(21) Numéro de dépôt: **85402303.3**

(22) Date de dépôt: **26.11.85**

(51) Int. Cl. ⁵ : **G 01 F 23/24**

(54) Sonde de mesure du niveau d'un liquide.

(30) Priorité: **27.11.84 FR 8418025**

(43) Date de publication de la demande:
**11.06.86 Bulletin 86/24**

(45) Mention de la délivrance du brevet:
**28.02.90 Bulletin 90/09**

(84) Etats contractants désignés:
**DE FR GB IT**

(56) Documents cité:
**EP-A-0 009 252
EP-A-0 039 510
DE-A-1 665 582
DE-A-2 700 229
DE-A-3 232 333
GB-A-2 094 983
US-A-3 434 940**

(73) Titulaire: **JAEGER
2, rue Baudin
F-92303 Levallois-Perret (FR)**

(72) Inventeur: **Draeger, Erich
109, Quai Dr. Dervaux
F-92600 Asnieres (Hauts de Seine) (FR)**

(74) Mandataire: **Bloch, Robert
2, square de l'Avenue du Bois
F-75116 Paris (FR)**

LIBERGRAF, STOCKHOLM 1990

## Description

La présente invention a pour objet une sonde de mesure du niveau d'un liquide dans un réservoir, comprenant un ruban conducteur de longueur déterminée appliqué sur un support isolant et réalisé dans un matériau dont la résistivité dépend de la température, prévue pour être montée sur ledit réservoir pour que, sur au moins une première partie, variable, de sa longueur, ledit ruban conducteur se trouve immergé dans ledit liquide, et, sur la deuxième partie non immergée restante, ledit ruban conducteur se trouve donc dans de l'air, le rapport variable entre lesdites première et deuxième parties étant ainsi lié au niveau variable a mesurer.

Une telle sonde est en particulier utilisé pour la mesure du niveau d'huile dans le carter d'un moteur à combustion interne pour automobile.

Pour une telle sonde, le matériau dont la résistivité dépend de la température est, de façon connue et par exemple, un alliage de nickel, de cobalt et de fer.

On connaît déjà une sonde de ce type, décrite dans la demande européenne publiée sous le No. 0 009 252. Avec cette sonde, la mesure du niveau du liquide est faite en appliquant une source de courant aux bornes de sortie de la sonde et en mesurant la valeur de la tension aux bornes de la sonde. La valeur de la tension aux bornes de la sonde à cet instant est représentative du niveau variable du liquide pour les raisons suivantes :

- la valeur de la tension aux bornes de la sonde à tout instant est représentative de la valeur de la résistance de la longueur totale du conducteur, car celle-ci est parcourue par un courant constant,
- la valeur de cette résistance dépend de la répartition des températures le long du conducteur, car le matériau dans lequel il est réalisé a une résistivité à fort coefficient de température,
- la répartition des températures le long du conducteur peut être considérée comme uniforme pour la première partie immergée, et uniforme pour la deuxième partie non immergée, ces deux parties, toutes deux chauffées par le passage du courant, étant à des températures différentes parce que différemment refroidies par les milieux dans lesquels elles se trouvent.

Lorsque l'on désire effectuer la mesure rapidement, on n'a pas le temps d'attendre que la température d'équilibre soit atteinte pour la partie immergée, très bien refroidie par le liquide et dont la montée en température est lente. Ainsi, au moment de la mesure de la tension, la température de la partie immergée est en train d'évoluer avec une constante de temps très supérieure à l'intervalle de temps écoulé depuis l'instant d'application de la source de courant.

Par contre, la partie non immergée du conducteur qui se trouve dans l'air est beaucoup moins bien refroidie et elle atteint sa température d'équilibre beaucoup plus rapidement, avec une constante de temps très courte.

Cette disparité de comportement entre la partie immergée du conducteur et sa partie non immergée a pour conséquence la non-linéarité de la variation de la valeur de la tension à l'instant de mesure, en fonction de la variation du niveau du liquide.

La présente invention vise à pallier cet inconvénient.

A cet effet, elle a pour objet une sonde de mesure du niveau d'un liquide du type défini ci-dessus, caractérisée par le fait que ledit support isolant est réalisé dans un matériau meilleur conducteur de la chaleur que l'air.

Grâce à l'invention, le refroidissement de la deuxième partie non immergée du conducteur par le milieu gazeux est efficace.

Il en résulte que la constante de temps, pour que la tension aux extrémités de la partie non immergée du conducteur atteigne sa valeur finale, lorsque la sonde est soumise à un échelon de courant, est beaucoup plus importante, ce qui permet d'obtenir, même pour des temps de mesure très brefs, une réponse du capteur linéaire.

L'invention sera mieux comprise à l'aide de la description suivante d'une forme de réalisation préférée de la sonde selon l'invention, faite en se référant aux dessins annexés, sur lesquels :

- la figure 1 représente, à l'échelle 2, une vue en coupe partielle de la sonde selon l'invention.
- la figure 2 représente, à l'échelle 4, une vue du réseau résistif utilisé dans la sonde de la figure 1.

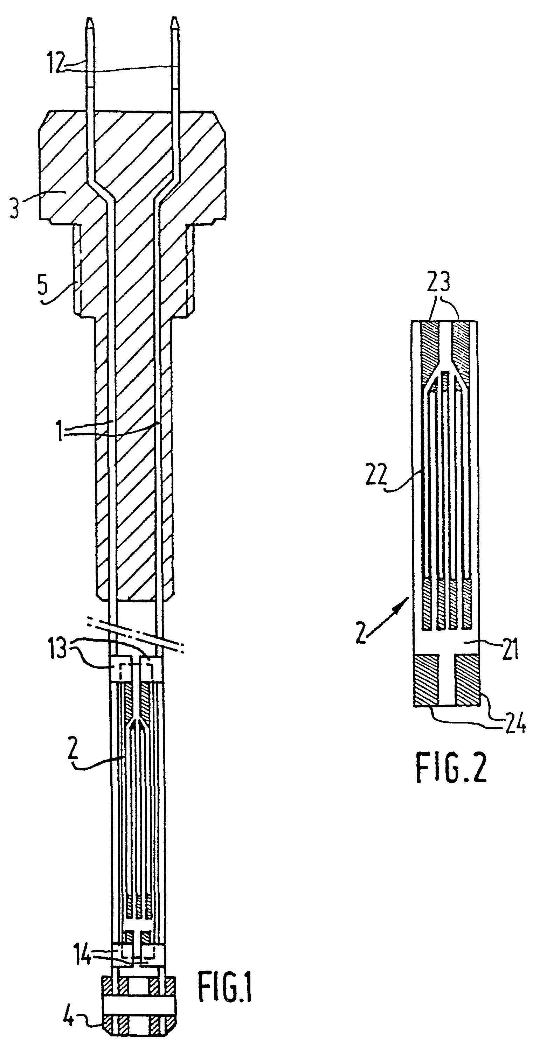

En référence à la figure 1, les deux bornes de sortie 12 de la sonde de mesure de niveau selon l'invention sont constituées par les deux extrémités voisines de deux pièces métalliques 1, dont les deux autres extrémités sont réunies aux extrémités d'un ruban conducteur, agencé ici pour former un réseau résistif 2 qui constitue la partie sensible de la sonde, partiellement immergée dans le liquide dont on souhaite mesurer le niveau.

Les pièces métalliques 1 sont maintenues en place du côté de la sortie par un corps moulé 3 dans un matériau isolant, et, au delà de l'élément résistif 2, par un capuchon protecteur isolant 4.

Le corps moulé 3 est muni d'un filetage 5 qui permet de fixer la sonde sur une ouverture taraudée, prévue à cet effet sur le réservoir contenant le liquide dont on mesure le niveau. Les pièces métalliques 1 s'étendent au delà du corps moulé 3 de façon à ce que les bornes de sortie 12 de la sonde soient accessibles de l'extérieur du réservoir.

En référence à la figure 2, le réseau résistif 2, appliqué sur un support isolant 21, réalisé dans un matériau meilleur conducteur de la chaleur que l'air, est constitué par un ruban résistif 22 de longueur déterminée, replié en zig-zag, pour que les segments qui le constituent soient perpendiculaires à la surface du liquide, et dont les deux accès 23 sont situés du même côté du support 21. Le ruban résistif 22 est réalisé dans un matériau dont la resistivité présente un fort coefficient de température. Deux pavés 24 du même matériau que le ruban sont disposés du côte du support 21 opposé aux accès 23.

En revenant maintenant à la figure 1, le réseau résistif 2 est fixé aux pièces métalliques 1 à l'aide de deux paires de languettes rabattues 13 et 14 dont sont munies les pièces métalliques 1, respectivement soudées aux accès 23 et aux pavés 24.

Le réseau résistif peut être fabriqué par le procédé suivant: un feuillard résistif, dont la résistivité présente un fort coefficient de température, est appliqué sur une feuille de support isolant, meilleur conducteur de la chaleur que l'air. Une gravure chimique permet alors de réaliser un grand nombre d'exemplaires du réseau résistif; les accès 23 et les pavés 24 sont ensuite étamés ou non, selon la technologie de soudure; la feuille est enfin découpée pour obtenir les réseaux individuels.

La sonde selon l'invention est utilisée comme cela est maintenant décrit. La sonde est montée sur le réservoir pour que, sur au moins une première partie, variable, de sa longueur, le ruban conducteur 22 se trouve immergé dans ledit liquide. La deuxième partie, restante, non immergée, se trouve ici dans l'air. Le rapport variable entre la première partie et la deuxième partie est ainsi lié au niveau variable à mesurer. Pour effectuer une mesure, on applique un courant constant à la sonde et on mesure, après un intervalle de temps déterminé, la valeur de la tension à ses bornes. Du fait du bon refroidissement de la première partie non immergée du ruban 22 par le support 21, la température de cette partie évolue assez lentement pour que la mesure de la tension soit représentative de la valeur du niveau du liquide de façon linéaire, même pour les intervalles de mesure très brefs.

A titre d'exemple, le corps moulé 3 de la sonde peut être réalisé dans un thermoplastique chargé de fibre de verre et les pièces métalliques en laiton. De même, le matériau support du réseau résistif, meilleur conducteur de la chaleur que l'air peut être avantageusement constitué par du Kapton de 25 µm d'épaisseur, commercialisé par la firme Du Pont. Le réseau résistif lui-même peut être avantageusement réalisé dans un alliage ou dans un métal pur à fort coefficient de température et de résistivité convenable et dont l'épaisseur est inférieur à 20 µm.

Toujours à titre d'exemple, la dispersion des valeurs de résistance ainsi réalisées est de ± 2 %.

L'automatisation complète des opérations de montage de ce type de sonde est possible sans difficultés.

Cependant, la forme du réseau résistif et de son support qui viennent d'être décrits n'est pas limitative et peut être modifiée sans sortir du domaine d'application de l'invention.

## Revendications

1. Sonde de mesure du niveau d'un liquide dans un réservoir, comprenant un ruban conducteur (22) de longueur déterminée, appliqué sur un support isolant (21), et réalisé dans un matériau dont la résistivité dépend de la température, prévue pour être montée sur ledit réservoir pour que, sur au moins une première partie, variable, de sa longueur, ledit ruban conducteur (22) se trouve immergé dans ledit liquide, et, sur la deuxième partie non immergée restante, ledit ruban conducteur (22) se trouve donc dans de l'air, le rapport variable entre lesdites première et deuxième parties étant ainsi lié au niveau variable à mesurer, caractérisée par le fait que ledit support isolant (21) est réalisé dans un matériau meilleur conducteur de la chaleur que l'air.

2. Sonde selon la revendication 1, dans laquelle ledit ruban conducteur (22) est obtenu par gravure chimique dudit support isolant (21) sur lequel a été appliqué une feuille dudit matériau dont la résistivité dépend de la température.

3. Sonde selon l'une des revendications 1 ou 2, dans lequel ledit matériau dont la résistivité dépend de la température est choisi parmi les métaux purs et les alliages.

4. Sonde selon l'une des revendications 1 à 3, dans laquelle il est prévu deux pièces métalliques (1) allongées dont les premières extrémités constituent des électrodes de sortie (12) de la sonde et les deuxièmes extrémités sont reliées électriquement audit conducteur (2) auquel elles servent de support.

5. Sonde selon la revendication 4, dans laquelle les deux dites pièces métalliques (1) sont surmoulées dans un corps isolant (3) sur lequel est prévu un filetage (5) destiné à coopérer avec une ouverture taraudée prévue sur ledit réservoir.

## Patentansprüche

1. Sonde zum Messen des Pegels einer Flüssigkeit in einem Behältnis, mit einem leitenden Band (22) von einer bestimmten Länge, das auf einem nichtleitenden Träger aufgebracht und in einem Material ausgeführt ist, dessen spezifischer Widerstand von der Temperatur abhängt, vorgesehen zum Anbringen auf dem Behältnis, damit sich das leitende Band (22) über wenigstens einen in seiner Länge variablen ersten Teil untergetaucht in der Flüssigkeit und über den restlichen, nicht untergetauchten zweiten Teil daher in der Luft befindet, wobei die variable Beziehung zwischen dem ersten und zweiten Teil auf diese Weise an den zu messenden variablen Pegel gebunden ist, dadurch gekennzeichnet, daß der nichtleitende Träger (21) in einem Material ausgeführt ist, das ein besserer Wärmeleiter als Luft ist.

2. Sonde nach Anspruch 1, bei welcher das leitende Band (22) durch chemische Ätzung des nichtleitenden Trägers (21) erhalten wird, auf dem eine Folie aus dem Material aufgebracht wurde, dessen spezifischer Widerstand von der Temperatur abhängt.

3. Sonde nach einem der Ansprüche 1 oder 2, bei welcher das Material, dessen spezifischer Widerstand von der Temperatur abhängt, zwischen reinen Metallen und Legierungen ausgewählt wird.

4. Sonde nach einem der Ansprüche 1 bis 3, bei welcher zwei gestreckte Metallteile (1) vorgesehen sind, deren erste Enden die Ausgangselektroden (12) der Sonde darstellen und deren zweite Enden elektrisch mit dem Leiter (2) verbunden sind, bei dem sie als Träger dienen.

5. Sonde nach Anspruch 4, bei welcher die beiden Metallteile (1) in einem nichtleitenden Körper (3) ausgegossen sind, auf welchem ein Außengewinde (5) vorgesehen ist, das dafür bestimmt ist, mit einer Gewindebohrung zusammenzuwirken, die an dem Behältnis vorgesehen ist.

**Claims**

1. Probe for measuring the level of a liquid in a reservoir, comprising a conducting ribbon (22) of given length, applied on an insulating support (21), and made from a material whose resistance depends on its temperature, provided for mounting on said reservoir, so that said conducting ribbon (22) is immersed in said liquid over at least a variable first part of its length, and said conducting ribbon (22) is therefore in air over the non-immersed remaining second part, the variable ratio between said first and second parts being thus related to the variable level to be measured, characterised in that said insulating support (21) is made from a material which is a better conductor of heat than air.

2. Probe according to claim 1, wherein said conducting ribbon (22) is obtained by chemical etching of said insulating support (21) on which has been applied a foil of said material whose resistivity depends on the temperature.

3. Probe according to one of claims 1 or 2, wherein said material whose resistivity depends on its temperature is chosen from pure metals and alloys.

4. Probe according to one of claims 1 to 3, wherein two elongated metal pieces (1) are provided, whose first ends form output electrodes (12) of the probe and whose second ends are electrically connected to said conductor (2) for which they serve as support.

5. Probe according to claim 4, wherein said two metal pieces (1) are integrally molded in an insulating body (3) on which is provided a threaded portion (5) for engagement with a tapped opening provided in said reservoir.

FIG.1

FIG.2